# EUROPÄISCHE PATENTSCHRIFT

(11) **EP 1 067 650 B1**
(45) Veröffentlichungstag und Bekanntmachung des Hinweises auf die Patenterteilung: **23.06.2004**
(21) Anmeldenummer: 00810542.1
(22) Anmeldetag: 21.06.2000
(51) Int. Cl.: H02J 3/14

(54) **Steuereinrichtung zur Verteilung elektrischer Energie und Betriebsverfahren**
Control arrangement For the distribution of electric power and method of operation
Arrangement de commande de la distribution d'énergie électrique et procédé de fonctionnement

(30) Priorität: 05.07.1999 CH 123399
(43) Veröffentlichungstag der Anmeldung: 10.01.2001
(73) Patentinhaber: Elro (Holding) AG, 5620 Bremgarten (CH)
(72) Erfinder: Neudecker, Peter, 5610 Wohlen (CH)
(74) Vertreter: Liebetanz, Michael, Dipl.-Phys.

(56) Entgegenhaltungen:
- EP-A- 0 254 098
- EP-A- 0 913 905
- FR-A- 2 305 045
- US-A- 5 521 838

## Beschreibung

Die Erfindung betrifft eine Steuereinrichtung zur Verteilung elektrischer Energie für eine Vielzahl von elektrischen Heizeinrichtungen, die über verschiedene Phasen und Neutralleiter mit Spannung versorgt werden, wobei die Vorrichtung eine der Anzahl der Heizeinrichtungen entsprechende Zahl von Kontakten aufweist und über eine Umschalteinrichtung verfügt, mit der die Spannungsversorgung der Heizeinrichtungen unterbrechbar ist, wenn die Gesamtleistungsaufnahme der elektrischen Heizeinrichtungen grösser als ein Maximalwert ist.

Eine solche Vorrichtung, bei der die Umschaltvorrichtung in kontinuierlicher Weise arbeitet und periodisch und aufeinanderfolgend die Spannungsversorgung der Heizeinrichtungen unterbricht, ist aus der FR 2 305 045 bekannt und dient dazu, den aus dem Stromnetz gezogenen maximalen Strom zu begrenzen. Um die Betriebskosten für einen elektrisch beheizten thermischen Apparat auf ein möglichst tiefes Niveau zu bringen, wird die Gesamtleistungsaufnahme gemessen und bei der Überschreitung eines Grenzwertes einzelne Heizeinrichtungen für vorbestimmte Zeitdauern abgeschaltet, so dass die maximale Energieentnahme nicht überschritten wird. Solche Eingriffe mit Geräten des Standes der Technik durch zeitlich begrenztes Aufschalten einzelner Heizquellen beeinflusst die Gebrauchstauglichkeit eines damit ausgestalteten Herdes erheblich.

Die FR 2 305 045 ist daher im wesentlichen dafür ausgelegt, gewissen elektrischen Verbrauchern bei Bedarf Energie zuzuführen und ggf. einen Boiler mit weniger Energie zu versorgen. Solche Abschaltzeiten lassen sich in einer modernen Küche nur schwer mit dem Energiebedarf bei guter Auslastung der Küche und modernen Heizeinrichtungen vereinbaren.

Ausgehend von diesem Stand der Technik liegt der Erfindung daher die Aufgabe zugrunde, eine Vorrichtung der eingangs genannten Art anzugeben, die bei Erreichen eines möglichst tiefen elektrischen Verbrauches zugleich die Gebrauchstauglichkeit der Vorrichtung maximiert.

Diese Aufgabe wird erfindungsgemäss durch die Merkmale der unabhängigen Ansprüche gelöst. Die Steuereinrichtung ist so ausgestaltet, dass nach Ablauf einer vorbestimmten Zeitperiode der besagte Maximalwert durch einen Steuerimpuls um einen vorbestimmten Betrag vergrösserbar oder verkleinerbar ist. Der vorbestimmte Betrag kann beispielsweise absolut festgelegt sein. Er kann auch in Prozenten des letzten Maximalwertes angegeben werden oder in Abhängigkeit von dem Änderungsvorschlag nach der vorletzten Zeitperiode bestimmt werden.

Damit ist der Maximalwert kein statischer Wert, der sich an der Belastbarkeit des elektrischen Systems ausrichtet, sondern ein Parameter, mit dem beispielsweise eine Küche mit vielen Heizeinrichtungen entsprechend ihrer Nutzung im Leistungsverbrauch optimal betrieben werden kann.

Bei der einfachsten Ausgestaltung wird es dem Benutzer nach vorbestimmten Zeitperioden ermöglicht, den Maximalwert entsprechend seiner Zufriedenheit abzuändern. Hat der Benutzer die Systemeingriffe subjektiv nicht oder nur wenig gespürt, so wird er den Maximalwert erniedrigen. Hat er dagegen die Eingriffe stark verspürt, so wird der Maximalwert der Leistungsaufnahme erhöht.

Diese Benutzerwahl kann auch durch einen Algorithmus ersetzt werden, der diese Wahl an Hand von Parametern trifft. Es ist auch eine Kombination der beiden Wege möglich.

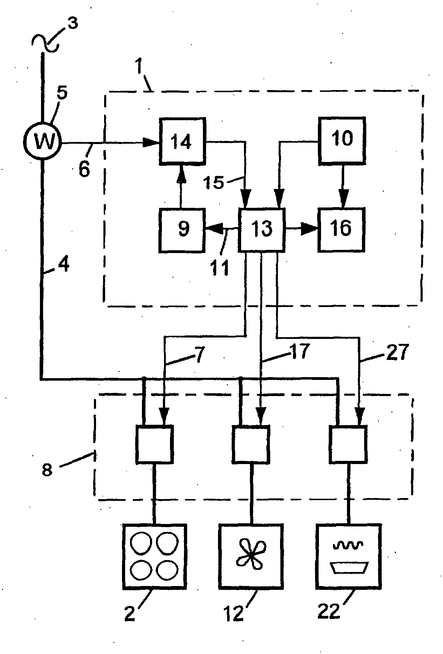

Nachstehend wird nun die Erfindung anhand bevorzugter Ausführungsbeispiele im Zusammenhang mit einer einzigen Zeichnung näher erläutert. Diese zeigt ein Blockschaltbild einer erfindungsgemässen Steuereinrichtung.

Die Steuereinrichtung 1 zur Verteilung elektrischer Energie ist für eine Vielzahl von hier drei elektrischen Heizeinrichtungen 2, 12 und 22 vorgesehen, die über verschiedene Phasen und Neutralleiter mit Spannung versorgt werden. Diese Spannungsversorgung ist mit dem Bezugszeichen 3 versehen, wobei die Spannungsversorgungsleitungen 4 als einfache Verbindungslinie dargestellt ist.

Als Beispiel sind die drei Heizeinrichtungen 2, 12 und 22 als Kochplatteneinheit, Backofen und Mikrowelleneinheit ausgestaltet. Die Anzahl der Heizeinrichtungen ist natürlich nicht begrenzt und der Fachmann kennt noch eine Vielzahl weiterer Heizeinrichtungen, die beispielsweise in Grossküchen eingesetzt werden.

In der Leitung 4 ist ein Leistungsmesser 5 vorgesehen, mit dem der Wert der jeweils genutzten Leistung über eine Leitung 6 an die Steuereinrichtung 1 übermittelt wird. Die Steuereinrichtung 1 weist eine der Anzahl der Heizeinrichtungen 2, 12 und 22 entsprechende Zahl von Ausgangskontakten und Leitungen 7, 17 und 27 auf, die mit einer Umschalteinrichtung 8 verbunden sind, mit der die Spannungsversorgung der Heizeinrichtungen 2, 12 und 22 jeweils einzeln unterbrechbar ist. Dies geschieht insbesondere dann, wenn die Gesamtleistungsaufnahme der elektrischen Heizeinrichtungen 2, 12 und 22 grösser als ein Maximalwert 9 ist, der in der Zeichnung durch den zugehörigen ihn speichernden Speicherbaustein dargestellt ist. Die Steuereinrichtung 1 weist zusätzlich einen Zeitgeber oder Timer 10 auf, der nach einer vorbestimmten Zeitperiode einen Steuerimpuls aussendet. Diese Zeitperiode kann fest eingestellt oder variabel sein.

Der Begriff Gesamtleistungsaufnahme umfasst hier nicht nur die augenblickliche Leistungsaufnahme oder die Leistungsaufnahme zu einem bestimmten Zeitpunkt, sondern ist an den tatsächlichen Mess- und Abrechnungsmodalitäten der Energieversorger ausgerichtet. Dies bedeutet, dass Energieversorger nicht einen festen maximalen Gesamtleistungsaufnahmewert vorgeben, bei dessen Überschreitung beispielsweise Tarifänderungen eintreten. Vielmehr handelt es sich dabei um Mittelwerte über vorbestimmte Zeiträume. Diese können beispielsweise 15 Sekunden betragen. Auch sind hierbei längere Zeiträume möglich. Daher hat der Begriff der "Gesamtleistungsaufnahme der elektrischen Heizeinrichtungen" im Zusammenhang mit dieser Beschreibung und Ansprüchen jeweils insbesondere auch die Bedeutung "durchschnittliche Gesamtleistungsaufnahme der elektrischen Heizeinrichtungen über einen vorbestimmten Zeitraum". Diese Zeiträume sind jeweils sehr kurz gegenüber den durch den Timer 10 vorgegebenen Zeitperioden.

Nach Ablauf der besagten vorbestimmten Zeitperiode, vorgegeben durch den Timer 10, wird der besagte Maximalwert, der im Element 9 gespeichert ist, durch einen Steuerimpuls 11 um einen vorbestimmten Betrag vergrössert, verkleinert oder unverändert gelassen, wobei dieser Steuerimpuls 11 von einer Auswahlelektronik 13 erzeugt wird.

Die Auswahlelektronik 13 ist zusätzlich mit einem Komparator 14 verbunden, der kontinuierlich oder in vorbestimmten Zeitabständen von dem Leistungsmesser 5 ermittelten Leistungswert mit dem Maximalwert 9 vergleicht und das Ergebnis über die Datenleitung 15 der Auswahlelektronik 13 mitteilt.

Schliesslich kann eine Anzeige 16 vorgesehen sein, die insbesondere die nach Ablauf der Zeitperiode für die Ansteuerungsänderung vorgesehene Änderung anzeigt, insbesondere eine Anzeige mit beispielsweise drei Lampen, wobei das Brennen der ersten Lampe den Vorschlag der Erhöhung des Maximalwertes 9, das Brennen der dritten Lampe den Vorschlag der Erniedrigung des Maximalwertes 9 und das Brennen der zweiten und mittleren Lampe ein Unverändertlassen des Maximalwertes 9 bedeutet. Es können natürlich auch nur zwei Richtungsanzeigen (Erhöhung oder Erniedrigung des Maximalwertes) oder vier oder fünf Leuchtelemente mit entsprechender Unterteilung des Vorschlages für eine Erhöhung oder Erniedrigung des Maximalwertes vorgesehen sein.

Durch das Verfahren wird während des Betriebes eines elektrisch beheizten thermischen Apparates oder von elektrischen Heizeinrichtungen, der ständig aktuelle Wert der Leistungsaufnahme ermittelt und mit einem vorgegebenen Sollwert, dem Maximalwert 9, verglichen. Ist der aktuelle Istwert kleiner als der Sollwert, so wird nicht in die Regelvorgänge bei den einzelnen Heizquellen eingegriffen.

Dagegen reagiert die mit dem Verfahren arbeitende Vorrichtung bei einer Überschreitung des Sollwertes mit zeitlich gestaffelten Abschaltvorgängen bei verschiedenen Heizquellen. Es werden jeweils so viele Heizquellen gleichzeitig abgeschaltet, dass der für eine Messperiode vorgegebene Sollwert als Mittelwert wieder erreicht wird. Die Reihenfolge der abzuschaltenden Heizquellen kann in Abhängigkeit ihres jeweiligen Status gesetzt werden. Eine entsprechende Prioritätstabelle ist in der Steuerung 13 abgelegt. Dies gilt auch für die Abschaltdauer und die Mindestwiedereinschaltzeiten. So kann bei dem Status unterschieden werden, ob die Heizquelle sich in einem Aufheizvorgang befindet oder ob sie schon seit einiger Zeit um den Sollwert herum regelt.

Diese Eingriffe können für den Benutzer nicht spürbar, stark spürbar oder akzeptabel sein. Nach einer vorbestimmten Zeitdauer, beispielsweise eine Woche oder ein Monat, erzeugt die Steuereinrichtung vorzugsweise ein Erinnerungssignal, welches den Benutzer zu einer Eingabe entsprechend den obigen drei Alternativen auffordert. Bei einer Eingabe auf Nicht-Spürbarkeit kann dann der Maximalwert beispielsweise um 2 Prozent abgesenkt werden. Die Absenkung kann in Bezug auf die maximal mögliche Leistungsaufnahme des Systems oder relativ auf den zuletzt aktiven Maximal geschehen. Gleiches gilt für die Erhöhung. Es können auch mehr als drei Alternativen vorgesehen sein, wobei beispielsweise jeweils eine starke und eine weniger starke Veränderung vorgebbar ist. Die Veränderung kann andere Werte aufweisen, sie kann auch linear sein, insbesondere kann sie sich auch an vom Stromversorger vorgegebenen Tarif-Leistungsgrenzen orientieren.

Da bei einem grösseren thermischen Apparat oder grösseren thermischen Anlagen mit mehreren thermischen Apparaten, die jeweils diverse Heizeinrichtungen umfassen, bei seiner Installation, d.h. im vornherein, nicht klar erkennbar ist, welcher Sollwert für die maximal zulässige Leistungsaufnahme vorgegeben werden soll, weist das Verfahren gemäss weiteren Ausführungsbeispielen weitere Merkmale auf, um einen für die Gebrauchstauglichkeit des Apparates vorgegebenen Regelweg aufzuzeigen. Es handelt sich somit um ein selbstoptimierendes System.

Bei einem zweiten Verfahren wird ein Steuerverfahren eingesetzt, welches verschiedene Sekundärparameter benutzt, um die Eingriffsintensität zu ermitteln. Bei diesen Sekundärparametern handelt es sich beispielsweise um das Verhältnis von Eingriffszeit zu Betriebszeit oder das Verhältnis der Eingriffszeit zu Betriebszeit in Abhängigkeit zum relativen Sollwert, d.h. dem eingestellten Maximalwert, so dass sich hierfür ein objektives Mass der Spürbarkeit der Eingriffe ermitteln lässt. Es wird ein Schwellwert für die Spürbarkeit eines Eingriffs vorgegeben, der einem genannten Verhältnis entspricht. Überschreitet das Verhältnis den Schwellwert, so wird davon ausgegangen, dass der Eingriff spürbar war und der Sollwert der Steuerung wird angehoben. Liegt das Verhältnis unter dem relativen Sollwert, so wird davon ausgegangen, dass die zur Verfügung gestellte Leistung mehr als ausreichend ist und der Sollwert wird abgesenkt. Die Grösse der Veränderung des Sollwertes kann von der Abweichung des Verhältnisses zum Schwellwert abhängig sein. Bei grösseren Abweichungen ist es auch möglich, dass die vorbestimmte Zeitdauer verkürzt wird.

Durch diese Steuerung lässt sich erreichen, dass unabhängig von dem menschlichen Bedienpersonal einem thermischen Apparat oder einer Vielzahl von Heizeinrichtungen ein Mindestmass an Leistung zur Verfügung gestellt wird, so dass die Bediener ihre Aufgaben erfüllen können.

Soll zudem der Benutzer eine Möglichkeit haben, seine persönlichen Wünsche in das Verfahren einfliessen zu lassen, so wird er in bestimmten Zeitintervallen, z.B. einem Monat, von der Steuerung dazu aufgefordert, seine subjektive Meinung hinsichtlich des Verhaltens des Heizgerätes im letzten Monat anzugeben. Die Steuerung optimiert dann die maximale Leistungsaufnahme nicht (nur) anhand der oben genannten Verhältnisse, sondern ändert diese gemäss der Einschätzung des Benutzers für die nächste Zeitperiode nach oben bzw. unten ab.

Wenn bei einer veränderten Arbeitsweise, z.B. durch eine vermehrte Anzahl von gleichzeitigen Bedienern oder veränderten Arbeitsbedingungen, der Leistungsbedarf erhöht wird, so ergibt dies eine erhöhte Spürbarkeit, die dann beim nächsten Intervallwechsel schrittweise zu einer Anpassung des maximalen Leistungsbezuges nach oben führt. Solche Veränderungen können im Gastronomiegewerbe beispielsweise saisonal bedingt sein. Die vorliegende Erfindung befreit die Küche somit von einem starren Korsett der maximalen Leistungsaufnahme, die die möglichen Stromspitzen nur aufgrund der Auslegung der Küche festlegt, sondern geht auf die individuellen Erfordernisse der jeweiligen Küche, auf den Arbeitsumfang, auf die Arbeitsart und auch auf die saisonalen Gegebenheiten ein.

Die vorliegende Regelung ist ein über den Stand der Technik der Begrenzung der Leistungsaufnahme aus dem Netz hinausgehende Lösung, die sich nicht an dem vom Netz akzeptierten Maximum orientiert, sondern darauf ausgeht, die mit dem Leistungsbezug verbundenen Kosten zu minimieren. Dies geschieht durch eine willkürliche Leistungsbegrenzung unterhalb des maximalen Leistungsbezuges, die von den Benutzern noch als akzeptabel angesehen wird.

## Patentansprüche

1. Steuereinrichtung zur Verteilung elektrischer Energie für eine Vielzahl von elektrischen Heizeinrichtungen (2, 12, 22), die über verschiedene Phasen und Neutralleiter mit Spannung (3) versorgt werden, wobei die Vorrichtung eine der Anzahl der Heizeinrichtungen entsprechende Zahl von Kontakten (7, 17, 27) aufweist und über eine Umschalteinrichtung (8) verfügt, mit der die Spannungsversorgung (4) der Heizeinrichtungen (2, 12, 22) unterbrechbar ist, wenn die Gesamtleistungsaufnahme der elektrischen Heizeinrichtungen (2, 12, 22) grösser als ein Maximalwert (9) ist, **dadurch gekennzeichnet, dass** die Steuereinrichtung (1) Mittel enthält, womit nach Ablauf einer vorbestimmten Zeitperiode (10) der besagte Maximalwert (9) durch einen Steuerimpuls um einen vorbestimmten Betrag vergrösserbar oder verkleinerbar (11) ist.

2. Steuereinrichtung nach Anspruch 1, **dadurch gekennzeichnet, dass** in der Steuereinrichtung jeweils bei Überschreiten des Maximalwertes (9) ein Parameter als Funktion des Heizeinrichtungen (2, 12, 22) abschaltenden Eingriffs ermittelt und gespeichert (13) wird, dass die bei diesen Eingriffen erzeugten Parameter über die vorbestimmte Zeitperiode (10) gesammelt werden und dass nach Ablauf der vorbestimmten Zeitperiode (10) der Steuerimpuls (11) zur Änderung des Maximalwertes (9) in Abhängigkeit der Parameter erzeugt wird.

3. Steuereinrichtung nach Anspruch 2, **dadurch gekennzeichnet, dass** die Parameter aus dem Verhältnis der Eingriffszeit zur Betriebszeit und/oder der Eingriffszeit zur Betriebszeit in Abhängigkeit vom Maximalwert ermittelbar sind.

4. Steuereinrichtung nach Anspruch 1, **dadurch gekennzeichnet, dass** die Steuereinrichtung für eine Benutzereingabe mit oder ohne Erinnerungssignal (16) an den Ablauf der Zeitperiode (10) ausgestaltet ist, wobei mit der Benutzereingabe das besagte Steuersignal (11) zur Vergrösserung, zur Verkleinerung oder zum Gleichbleiben des Maximalwertes (9) erzeugbar ist.

5. Steuereinrichtung nach einem der Ansprüche 1 bis 3 und nach Anspruch 4, **dadurch gekennzeichnet, dass** mit der Steuereinrichtung ein von den Parametern abhängiges Richtungssignal erzeugbar ist, welches dem Benutzer mit dem Erinnerungssignal als Vorschlag zur Erzeugung eines entsprechenden Steuersignals (11) übermittelt wird.

6. Verfahren zur Steuerung des Verbrauchs elektrischer Energie für eine Vielzahl von elektrischen Heizeinrichtungen, die mit einer Steuereinrichtung nach einem der Ansprüche 1 bis 3 verbunden sind, wobei in der Steuereinrichtung kontinuierlich jeweils die Gesamtleistungsaufnahme aller elektrischen Heizeinrichtungen erfasst wird und mit einem Maximalwert der Leistungsaufnahme verglichen wird und wobei vorbestimmte elektrische Heizeinrichtungen abgeschaltet werden, wenn die besagte Gesamtleistungsaufnahme den Maximalwert überschreitet, **dadurch gekennzeichnet, dass** in der Steuereinrichtung bei Überschreiten des Maximalwertes ein Parameter als Funktion des Heizeinrichtungen abschaltenden Eingriffs ermittelt und gespeichert wird, dass die bei diesen Eingriffen erzeugten Parameter über eine vorbestimmte Zeitperiode gesammelt werden und dass nach Ablauf der vorbestimmten Zeitperiode in Abhängigkeit der Parameter der Maximalwert verändert wird.

7. Verfahren nach Anspruch 6, **dadurch gekennzeichnet, dass** die erzeugten Parameter mit einer vorbestimmten Funktion zu einem zweiten Parameter verknüpft werden, dass ein Schwellwert vorgegeben ist und dass nach Ablauf der vorbestimmten Zeitperiode bei Überschreiten des Schwellwertes durch den zweiten Parameter der besagte Maximalwert vergrössert und bei Unterschreiten verkleinert wird.

8. Verfahren nach Anspruch 7, **dadurch gekennzeichnet, dass** die vergrösserung bzw. die Verkleinerung des Maximalwertes von der Differenz des Schwellwertes zu dem zweiten Parameter abhängig ist.

## Claims

1. Control device to distribute electrical energy for a plurality of electrical heating equipments (2, 12, 22) that are supplied with voltage (3) through different phases and a neutral conductor, whereby the device has a number of contacts (7, 17, 27) corresponding to the number of heating equipments and has a switch-over device (8) with which the voltage supply (4) of the heating equipments (2, 12, 22) can be interrupted if the total power consumption by the electrical heating equipments (2, 12, 22) is greater than a maximum value (9), **characterised in that** the control device (1) contains means with which, after a pre-determined period of time (10) has elapsed, the said maximum value (9) can be increased or decreased by a pre-determined amount through a control pulse (11).

2. Control device according to Claim 1, **characterized in that**, each time the maximum value (9) is exceeded, a parameter is determined and stored (13) in the control device as a function of the intervention that switches off the heating equipments (2, 12, 22), **in that** the parameters generated on the occasion of these interventions are collected over a predetermined period of time (10) and **in that**, after the elapse of the predetermined time period (10), the control pulse (11) is generated to alter the maximum value (9) as a function of the parameter.

3. Control device according to Claim 2, **characterized in that** the parameter is ascertainable from the ratio between the intervention time and the operating time and/or between the intervention time and the operating time as a function of the maximum value.

4. Control device according to Claim 1, **characterized in that** the control device is configured for a user input with or without a reminder signal (16) at the expiry of the time period (10), whereby together with the user input the said control signal (11) can be generated to increase, decrease or keep constant the maximum value (9).

5. Control device according to one of the Claims 1 to 3 and according to Claim 4, **characterized in that** the control device enables the generation of a parameter-dependent directional signal that is communicated to the user together with the reminder signal as a suggestion to generate a corresponding control signal (11).

6. Method for controlling the consumption of electrical energy for a plurality of electrical heating equipments that are connected to a control device according to one of the Claims 1 to 3, whereby the total power consumption by all of the electrical heating equipments is recorded continuously at the time being in the control device and is compared with a maximum value for the power consumption, and whereby predetermined electrical heating equipments are switched off if the said total power consumption exceeds the maximum value, **characterized in that** when the maximum value is exceeded, a parameter is determined and stored in the control device as a function of the intervention that switches off the heating equipments, **in that** the parameters generated on the occasion of these interventions are collected over a predetermined period of time and **in that**, after the elapse of the predetermined time period, the maximum value is altered as a function of the parameter.

7. Method according to Claim 6, **characterized in that** the parameters generated are linked to a second parameter by a predetermined function, **in that** a threshold value is prespecified and **in that**, after the elapse of a predetermined period of time, the said maximum value is increased in the event that the threshold value is exceeded by the second parameter, and is decreased if it falls below it.

8. Method according to Claim 7, **characterized in that** the increase or decrease in the maximum value depends on the difference between the threshold value and the second parameter.

## Revendications

1. Dispositif de commande pour distribuer une énergie électrique pour une multiplicité de dispositifs de chauffage électrique (2, 12, 22), qui sont alimentés par une tension (3) au moyen de différentes phases et d'un conducteur neutre, le dispositif comportant un nombre de contacts (7, 17, 27), qui correspond au nombre des dispositifs de chauffage, et disposant d'un dispositif de commutation (8), au moyen duquel l'alimentation en tension (4) des dispositifs de chauffage (2, 12, 22) peut être interrompue lorsque la consommation totale de puissance des dispositifs de chauffage électrique (2, 12, 22) est supérieure à une valeur maximale (9), **caractérisé en ce que** le dispositif de commande (1) contient des moyens permettant, après l'écoulement d'un intervalle de temps prédéterminé (10), d'augmenter ou de réduire (11), d'une valeur absolue prédéterminée, ladite valeur maximale (9) à l'aide d'une impulsion de commande.

2. Dispositif de commande selon la revendication 1, **caractérisé en ce que** dans le dispositif de commande, respectivement lors de chaque dépassement de la valeur maximale (9), un paramètre est déterminé en fonction de l'intervention qui débranche des dispositifs de chauffage (2, 12, 22) et est mémorisé (13), que les paramètres, qui sont produits lors de ces interventions, sont rassemblés pendant l'intervalle de temps prédéterminé (10) et qu'après l'écoulement de l'intervalle de temps prédéterminé (10), l'impulsion de commande (11) pour modifier la valeur maximale (9) est produite en fonction des paramètres.

3. Dispositif de commande selon la revendication 2, **caractérisé en ce que** les paramètres sont réglables à partir du rapport de la durée d'intervention à la durée de fonctionnement et/ou de la durée d'intervention à la durée de fonctionnement en fonction de la valeur maximale.

4. Dispositif de commande selon la revendication 1, **caractérisé en ce que** le dispositif de commande est agencé pour une entrée d'utilisateur avec ou sans signal de rappel (16) concernant le déroulement de l'intervalle de temps (10), ledit signal de commande (11) pouvant être produit, avec l'entrée de l'utilisateur, pour augmenter, réduire ou maintenir la valeur maximale (9).

5. Dispositif de commande selon l'une des revendications 1 à 3 et selon la revendication 4, **caractérisé en ce qu'**avec le dispositif de commande, on peut obtenir un signal de direction, qui dépend des paramètres et qui est transmis à l'utilisateur avec le signal de rappel en tant que proposition pour produire un signal de commande correspondant (11).

6. Procédé pour commander la consommation d'énergie électrique pour une multiplicité de dispositifs de chauffage électriques, qui sont reliés à un dispositif de commande selon l'une des revendications 1 à 3, selon lequel dans le dispositif de commande, en permanence respectivement la consommation d'énergie totale de tous les dispositifs de chauffage électrique est détectée et est comparée à une valeur maximale de la consommation d'énergie, et selon lequel des dispositifs prédéterminés de chauffage électrique sont débranchés lorsque ladite consommation totale d'énergie dépasse la valeur maximale, **caractérisé en ce que** dans le dispositif de commande, lors du dépassement de la valeur maximale, un paramètre est déterminé et mémorisé en fonction de l'intervention qui débranche des dispositifs de chauffage, que les paramètres produits lors de ces opérations sont collectés pendant un intervalle de temps prédéterminé et qu'après l'écoulement de l'intervalle de temps prédéterminé, la valeur maximale est modifiée en fonction des paramètres.

7. Procédé selon la revendication 6, **caractérisé en ce que** les paramètres produits sont combinés à une fonction prédéterminée pour former un second paramètre, qu'il est prévu une valeur de seuil et qu'après l'écoulement de l'intervalle de temps prédéterminé lors du dépassement de la valeur de seuil par le second paramètre, ladite valeur maximale est accrue, et dans le cas où le second paramètre tombe au-dessous de la valeur de seuil, ladite valeur maximale est réduite.

8. Procédé selon la revendication 7, **caractérisé en ce que** l'accroissement ou la réduction de la valeur maximale dépend de la différence entre la valeur maximale et le second paramètre.
